# FASCICULE DE BREVET EUROPEEN

(11) **EP 3 009 836 B1**
(45) Date de publication et mention de la délivrance du brevet: **23.12.2020**
(21) Numéro de dépôt: 15188766.8
(22) Date de dépôt: 07.10.2015
(51) Int. Cl.: G01N 29/30, G01N 29/44

(54) **PROCÉDÉ ET ENSEMBLE DE VÉRIFICATION DE LA CALIBRATION D'UN SYSTÈME DE CONTRÔLE NON DESTRUCTIF DE PIÈCES**
VERFAHREN UND EINHEIT ZUM ÜBERPRÜFEN DER KALIBRIERUNG EINES NICHT-DESTRUKTIVEN KONTROLLSYSTEMS VON TEILEN
METHOD AND ASSEMBLY FOR VERIFYING THE CALIBRATION OF A SYSTEM FOR NON-DESTRUCTIVE TESTING OF WORKPIECES

(30) Priorité: 15.10.2014 FR 1459875
(43) Date de publication de la demande: 20.04.2016
(73) Titulaire: AIRBUS OPERATIONS (S.A.S), 31060 Toulouse (FR)
(72) Inventeur: BENTOUHAMI, Franck, 85250 CHAVAGNES EN PAILLERS (FR)
(74) Mandataire: Gicquel, Olivier Yves Gérard

(56) Documents cités:
- US-A1- 2007 000 328
- REVERDY F ET AL: "Simulation of ultrasonic inspection for sodium cooled reactors using CIVA", ADVANCEMENTS IN NUCLEAR INSTRUMENTATION MEASUREMENT METHODS AND THEIR APPLICATIONS (ANIMMA), 2011 2ND INTERNATIONAL CONFERENCE ON, IEEE, 6 juin 2011 (2011-06-06), pages 1-8, XP032153502, DOI: 10.1109/ANIMMA.2011.6172880 ISBN: 978-1-4577-0925-8
- REBELLO JOAO MARCOS A ET AL: "Simulation-aided UT weld inspection for improving integrity during pipe manufacture", 2014 IEEE FAR EAST FORUM ON NONDESTRUCTIVE EVALUATION/TESTING, IEEE, 20 juin 2014 (2014-06-20), pages 5-8, XP032664048, DOI: 10.1109/FENDT.2014.6928223 ISBN: 978-1-4799-4731-7 [extrait le 2014-10-16]

## Description

La présente invention concerne un procédé de vérification de la calibration d'un système de contrôle non destructif d'au moins une pièce, en particulier d'une pièce d'un aéronef.

Le système de contrôle non destructif considéré comprend une sonde ultrasonore, permettant notamment de détecter des défauts à l'intérieur de la pièce, par exemple une pièce en matériau composite.

Le contrôle par ultrasons est basé, de façon usuelle, sur la transmission et la réflexion d'ondes ultrasonores dans le matériau de la pièce à contrôler, et l'analyse des échos détectés en liaison avec les ondes émises.

Généralement, la vérification de la calibration d'un tel système de contrôle non destructif, avant le contrôle d'une pièce, est réalisée à l'aide d'une pièce de référence (ou référentiel) qui est fabriquée dans le même matériau et avec le même procédé que la pièce à contrôler.

De telles pièces de référence sont des cales étalons dont la géométrie est connue, maîtrisée et régulièrement contrôlée. Elles présentent, en général, différentes épaisseurs pour pouvoir créer une correction amplitude distance de type CAD, et des trous à fond plat pour vérifier la détection.

Généralement, les pièces de référence sont utilisées pour réaliser :
- une vérification avant chaque balayage de la configuration ultrasonore (à savoir d'une correction amplitude distance) ;
- une vérification de minima de détection. Ces caractéristiques peuvent être influencées par les propriétés ultrasonores, telles que la fréquence, la forme du faisceau acoustique, la bande passante,..., et la mécanique de moyens de balayage du système de contrôle non destructif ; et
- une vérification pour s'assurer que le système de contrôle non destructif présente un comportement qui peut être répété au cours du temps (en comparant des cartographies d'une même pièce de référence au cours du temps).

Toutefois, ce procédé de vérification de la calibration du système de contrôle non destructif présente un inconvénient lié à la nécessité d'utiliser de telles pièces de référence. En effet, les pièces de référence présentent un coût élevé. De plus, leur utilisation dans la vérification de la calibration, nécessite :
- la fabrication de nombreuses pièces de référence ;
- leur validation périodique ; et
- la fabrication de nouvelles pièces de référence notamment en cas d'usure ou d'endommagement.

Le document US-A-2007/0000328 décrit un procédé de détection de fissures au moyen d'un transducteur à ultrasons, ledit procédé comprenant une étape de simulation, qui permet de calculer des temps de vol théoriques et de comparer ces temps de vol théoriques aux temps de vol mesurés. Il est aussi connu par le document "Simulation-aided UT weld inspection for improving integrity during pipe manufacture" (REBELLO JOAO MARCOS A ET AL, 2014 IEEE FAR EAST FORUM ON NONDESTRUCTIVE EVALUATION/TESTING, IEEE, 20 juin 2014 (2014-06-20), pages 5-8) de simuler une pièce étalon virtuelle, afin de déterminer la meilleure position de défauts de référence dans une pièce étalon réelle.

La présente invention concerne un procédé de vérification de la calibration d'un système de contrôle non destructif d'au moins une pièce, permettant de remédier à cet inconvénient.

Selon l'invention, ledit procédé de vérification de la calibration d'un système de contrôle non destructif d'au moins une pièce, ledit système de contrôle non destructif comprenant au moins une sonde ultrasonore, est remarquable en ce qu'il comprend des étapes E1 à E3 successives consistant :
E1/ à réaliser des mesures, à l'aide du système de contrôle non destructif, sur au moins un réflecteur dit parfait, ledit réflecteur parfait comprenant au moins un défaut de référence, à enregistrer les mesures ainsi réalisées, et à créer et analyser une cartographie ultrasonore d'une surface d'entrée du réflecteur parfait ;
E2/ à déterminer une sonde ultrasonore virtuelle, à partir de données physiques de la sonde ultrasonore, en l'associant à une bande passante représentative de mesures réalisées à l'étape E1 ; et
E3/ à déterminer une cale étalon virtuelle, représentant une pièce dans le matériau de la pièce à contrôler comprenant les défauts de référence du réflecteur parfait, et une cartographie virtuelle en amplitude et en temps de vol d'une surface de fond de la cale étalon virtuelle, à l'aide d'une modélisation utilisant comme données d'entrée des caractéristiques de la pièce, la sonde virtuelle déterminée à l'étape E2 et des mesures réalisées à l'étape E1, et à analyser ladite cartographie virtuelle pour déduire des caractéristiques de la calibration dudit système de contrôle non destructif.

Ainsi, grâce à l'invention, la vérification de la calibration est réalisée à l'aide d'un réflecteur parfait présentant des défauts de référence, qui est utilisé en liaison avec des caractéristiques du matériau de la pièce, à travers une modélisation. Il n'est ainsi pas nécessaire, comme précisé ci-dessous, de prévoir une pièce de référence par type de matériau et par type de procédé de fabrication de pièce, ce qui permet de remédier à l'inconvénient précité.

Avantageusement, le procédé comprend une étape supplémentaire E0 antérieure à l'étape E1, cette étape supplémentaire E0 consistant à déterminer les caractéristiques d'un matériau correspondant à celui de la pièce à contrôler, permettant de définir une pièce de référence virtuelle utilisée à l'étape E3.

En outre, de façon avantageuse, le procédé consiste à prévoir sur le référentiel parfait au moins un défaut de référence choisi parmi :
- un trou à fond plat ;
- un trou traversant ;
- un bord de pièce usiné ;
- une zone sans défaut ;
- une bille.

Par ailleurs, ledit procédé de vérification de la calibration présente au moins certaines des caractéristiques suivantes, prises individuellement ou en combinaison :
- l'analyse à l'étape E1 de la cartographie ultrasonore de la surface d'entrée consiste à vérifier des moyens mécaniques du système de contrôle non destructif ;
- à l'étape E3, l'analyse de la cartographie virtuelle de la surface de fond consiste à vérifier si des défauts de référence du réflecteur parfait sont présents sur cette cartographie virtuelle et ont été détectés et à comparer l'amplitude de la cartographie virtuelle à une valeur prédéterminée ;
- l'étape E1 est réalisée avec une sonde ultrasonore dans un état initial et une cartographie virtuelle est générée à l'étape E3 ;
- le procédé comprend au moins une étape de stockage d'au moins certaines des informations suivantes :
   - des mesures enregistrées à l'étape E1 ;
   - au moins une cartographie ;
   - des propriétés de la sonde ultrasonore.

La présente invention concerne également une méthode de contrôle d'une pièce, à l'aide d'un système de contrôle non destructif comprenant au moins une sonde ultrasonore, ladite méthode de contrôle comprenant un procédé de vérification de la calibration du système de contrôle non destructif, tel que celui précité.

La présente invention concerne, en outre, un ensemble de vérification de la calibration d'un système de contrôle non destructif, pour la mise en œuvre du procédé précité.

Cet ensemble est revendiqué dans la revendication 9.

Avantageusement, ledit au moins un défaut de référence du référentiel parfait est choisi parmi :
- un trou à fond plat ;
- un trou traversant ;
- un bord de pièce usiné ;
- une zone sans défaut ;
- une bille.

Les figures annexées feront bien comprendre comment l'invention peut être réalisée. Sur ces figures, des références identiques désignent des éléments semblables.

La figure 1 est un schéma synoptique d'un exemple de système de contrôle non destructif, auquel s'applique l'invention.

La figure 2 est une vue schématique en plan d'un exemple de réflecteur parfait, susceptible d'être utilisé pour la mise en oeuvre de l'invention.

La figure 3 illustre un ensemble de vérification pour mettre en œuvre au moins une vérification de calibration.

Les figures 4 et 5 sont des synoptiques, respectivement, d'un procédé de vérification de calibration et d'une méthode de contrôle non destructif de pièce.

La présente invention s'applique donc à un système de contrôle non destructif 1 d'au moins une pièce 5. Concernant la pièce, il peut s'agir, par exemple, d'un panneau d'un fuselage d'un aéronef, en particulier d'un avion de transport. La présente invention est décrite, à titre d'exemple, pour une pièce 5 en matériau composite, mais peut être appliquée à tout type de matériau.

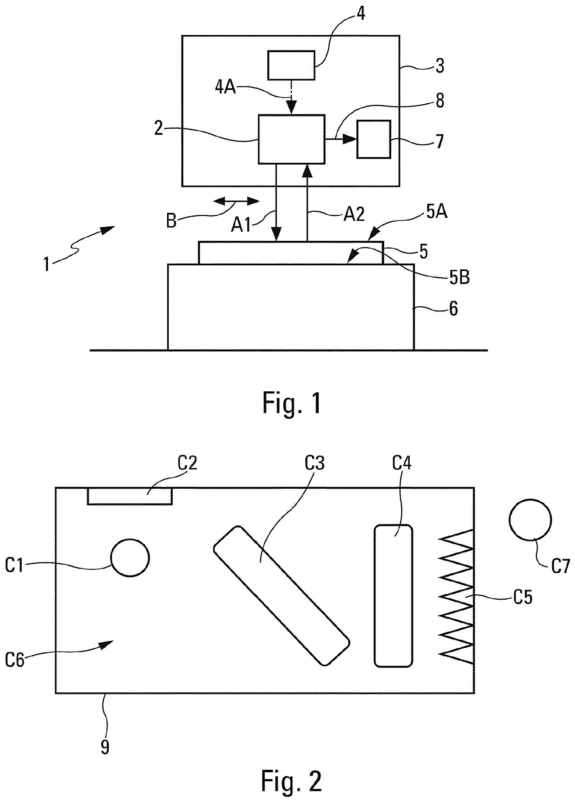

Comme représenté schématiquement sur la figure 1, un système de contrôle 1 de type non destructif comprend au moins une sonde ultrasonore 2, montée sur un ensemble mécanique 3. La sonde ultrasonore 2 émet des ondes sous la forme d'un faisceau acoustique dont la fréquence est située dans la gamme de fréquences des ultrasons (entre 16 000 et 10 000 000 Hertz). L'ensemble mécanique 3 comprend des moyens 4 usuels (tels qu'une source d'émission, un robot, un portique,...) pour générer un balayage de la sonde ultrasonore 2 sur une pièce 5 positionnée sur un support 6 et pour régler sa position, comme illustré par une flèche 4A. Dans l'exemple décrit ci-dessous, la sonde ultrasonore 2 suit une trajectoire de balayage parallèle à une surface de la pièce 5.

De façon usuelle, la sonde ultrasonore 2 est caractérisée par différentes propriétés physiques telles que la fréquence, la forme, la focalisation ou encore la bande passante du faisceau acoustique,...

Le système de contrôle 1 permet de réaliser un contrôle non destructif d'une pièce 5 (par exemple en matériau composite), notamment une pièce d'un aéronef, pour détecter des défauts dans la pièce 5.

Le contrôle non destructif par ultrasons comprend, de façon usuelle :
- l'émission d'ondes ultrasonores par la sonde 2 vers la pièce 5 à contrôler, comme illustré schématiquement par une flèche A1 sur la figure 1. Les ondes ultrasonores pénètrent dans la pièce 5 par une première face de la pièce 5, appelée surface d'entrée 5A, et traversent la pièce 5 jusqu'à une deuxième face de la pièce 5, appelée surface de fond 5B ;
- la réflexion des ondes ultrasonores par la pièce 5 et la détection des ondes ultrasonores réfléchies par la pièce 5 (comme illustré par une flèche A2). Ces ondes ultrasonores sont réfléchies par la surface d'entrée 5A (échographie d'entrée), ainsi que par la surface de fond 5B et par différents éléments, tels que des défauts, situés entre la surface d'entrée 5A et la surface de fond 5B (échographie de fond) ; ainsi que
- la génération et l'analyse d'une cartographie en amplitude (des ondes réfléchies) et en temps de vol (donnée représentative de l'épaisseur de la pièce 5) des ondes ultrasonores réfléchies.

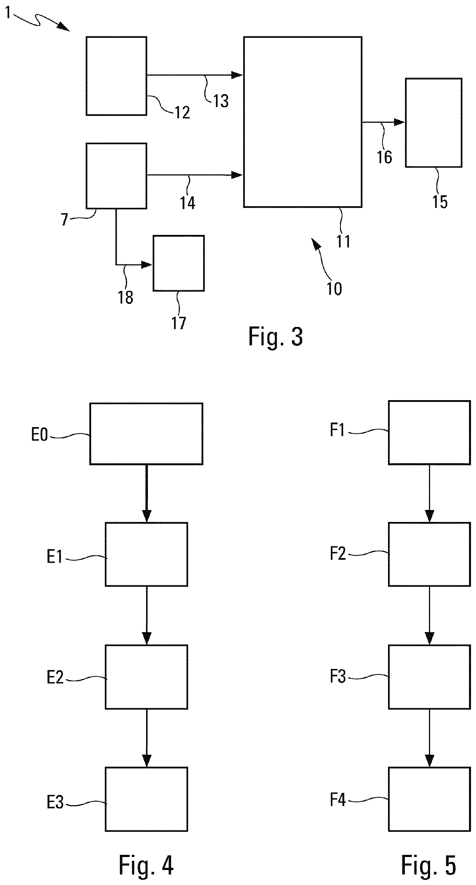

Le système de contrôle 1 comporte un ensemble 10, cet ensemble 10 comprenant, comme représenté sur la figure 3 :
- une unité de traitement de données 11 comprenant un logiciel de traitement de données (tel que le logiciel CIVA® édité par la société CEA LIST) configuré pour modéliser une cartographie des ondes ultrasonores réfléchies à partir de caractéristiques et propriétés du matériau de la pièce 5, telles que le type de matériau composite (nature de la résine, type de fibre, séquence de drapage, taux volumique de fibres,...) et des caractéristiques ultrasonores de la chaîne d'acquisition (qui elles sont mesurées sur un réflecteur parfait comme précisé ci-dessous) ;
- une unité d'interface homme/machine 12, par exemple un ensemble écran/clavier, permettant à un opérateur d'entrer des données dans l'unité de traitement de données 11 via une liaison 13 notamment ;
- une unité d'enregistrement 7 pour enregistrer les mesures réalisées à l'aide de la sonde ultrasonore 2 et reçues via une liaison 8 (figure 1) et fournir les données enregistrées à l'unité de traitement de données 11, soit directement (par exemple via une liaison 14), soit indirectement par l'intermédiaire de l'unité d'interface homme/machine 12 ; et
- des moyens de présentation de données 15, par exemple une unité d'affichage ou d'impression, qui reçoit via une liaison 16 les résultats des traitements mis en œuvre par l'unité de traitement de données 11 et les présente à un opérateur.

La présente invention prévoit, pour réaliser une vérification de la calibration du système de contrôle 1, l'utilisation d'un réflecteur dit réflecteur parfait 9 (ou réflecteur étalon), représenté à titre d'illustration sur la figure 2. Ce réflecteur parfait 9 contient des défauts de référence C1 à C5 réalisés par usinage (traversant ou non) dont les caractéristiques dimensionnelles sont connues, ainsi que des zones sans défauts telles que la zone C6.

Dans un mode de réalisation particulier, le réflecteur parfait 9 est réalisé sous la forme générale d'une plaque rectangulaire, en un matériau tel que du verre ou du métal. Il présente des défauts de référence C1 à C5, tels que :
- un trou C1 à fond plat (ou traversant), par exemple de 6 mm de diamètre ;
- un usinage C2 du bord de la plaque (traversant ou non), par exemple de 6 mm de largeur ;
- un usinage C3, C4 sur la plaque, par exemple de 6 mm de largeur ;
- un évidement caractéristique C5 d'extrémité (par exemple de forme dentelée, ou peigne).

Avantageusement, le réflecteur parfait 9 peut également comporter une bille C7.

La vérification de la calibration du système de contrôle 1 est mis en œuvre avant le contrôle effectif de la pièce 5, à l'aide de l'ensemble 10.

Cette vérification présente une suite d'étapes E0, et E1 à E3 (figure 4) telles que :
- E0 : obtention et archivage des propriétés et caractéristiques d'un matériau correspondant à celui de la pièce 5 ;
- E1 : inspection du réflecteur parfait 9, génération et analyse d'une cartographie ultrasonore de la surface d'entrée du réflecteur parfait 9, appelée cartographie physique d'entrée ;
- E2 : création, dans l'unité de traitement de données 11, d'une sonde, dite sonde virtuelle, à partir de données physiques de la sonde ultrasonore 2, telles que les dimensions, la géométrie,..., en l'associant à une bande passante, représentative des mesures réalisées à l'étape E1 ; et
- E3 : modélisation, par l'unité de traitement de données 11, d'une cale étalon virtuelle et cartographie en amplitude et en temps de vol de la surface de fond de la cale étalon virtuelle, appelée cartographie virtuelle de fond.

L'étape E0 est une étape mise en œuvre antérieurement à la vérification effective de la calibration. Cette étape E0 permet d'obtenir et d'archiver des propriétés et caractéristiques du matériau de la pièce 5 à contrôler ultérieurement, notamment sous forme d'une matrice de coefficients Cij. Les coefficients Cij sont relatifs à une constante d'élasticité et correspondent aux différentes valeurs d'une matrice utilisée pour retranscrire mathématiquement le comportement mécanique du matériau. Cette étape E0 peut être mise en œuvre sur un banc de caractérisation ou au moyen d'une méthode inverse (en partant de données ultrasonores réelles obtenues sur une unique pièce de référence par matériau et par procédé). Cette étape E0 est mise en œuvre une seule fois. Les caractéristiques du matériau de la pièce 5 peuvent être obtenues de façon centralisée dans un site ou laboratoire spécifique qui les archive et les fournit, ensuite, aux différents utilisateurs réalisant des contrôles non destructifs à l'aide d'un système de contrôle 1.

Cette étape E0 permet de définir dans l'unité de traitement de données 11 une pièce de référence virtuelle dont les propriétés et caractéristiques du matériau, à savoir pour un matériau composite la nature des fibres, le type de résine, la séquence de drapage et le taux volumique de fibres, sont connues et peuvent être utilisées comme paramètres d'entrée.

L'étape E0 permet ainsi :
- l'obtention et l'archivage des propriétés et caractéristiques et de la matrice des coefficients Cij, ces opérations étant réalisées une seule fois pour un matériau donné et les résultats étant réutilisés à chaque fois qu'une vérification de la calibration pour un contrôle d'une pièce 5, réalisée dans ledit matériau donné, est mise en œuvre ; et
- la création d'une pièce de référence virtuelle, enregistrée dans l'unité de traitement de données 11.

Par ailleurs, les étapes E1 à E3 sont réalisées dans le cadre d'un contrôle non destructif d'une pièce 5.

L'étape E1 consiste à réaliser et enregistrer des mesures d'une inspection du réflecteur parfait 9, en balayant la sonde ultrasonore 2 sur le réflecteur parfait 9, positionné sur le support 6. Les signaux de l'échographie d'entrée en chaque point (classiquement nommés signaux « A-Scan » en terminologie anglo-saxonne) de la surface d'entrée sont traités par l'unité de traitement de données 11 (et notamment le logiciel de traitement de données), qui génère (ou crée) une cartographie de la surface d'entrée du réflecteur parfait 9, appelée cartographie physique d'entrée.

L'analyse de la cartographie physique d'entrée consiste à identifier, s'il y a, une ou plusieurs zones de la surface d'entrée n'ayant pas été balayées par le faisceau d'ondes ultrasonores (ou uniquement partiellement) en raison d'une défaillance mécanique des moyens 4, tels que le système d'émission ou de balayage du faisceau (décalage d'un axe par exemple) de la sonde ultrasonore 2. L'analyse des signaux « A-Scan » de la zone C6 fournit des informations sur le contenu fréquentiel de la sonde 2. Avantageusement, l'analyse de la cartographie physique d'entrée de la bille C7 valide les propriétés physiques de la sonde ultrasonore 2 et permet d'identifier les éventuelles anomalies mécaniques dans le système de focalisation du faisceau d'ondes ultrasonores émises par la sonde ultrasonore 2.

Au cours de l'étape E2, une sonde virtuelle est générée dans l'unité de traitement de données 11, et plus particulièrement dans le logiciel de traitement de données. Cette sonde virtuelle a les mêmes caractéristiques physiques (dimensions, géométrie des différents éléments mécaniques, identification des éléments activés en cas d'une sonde multiéléments,...) que la sonde ultrasonore 2. Avantageusement, la sonde virtuelle générée est archivée dans l'unité de traitement de données 11, et cette étape E2 est réalisée uniquement lorsque la sonde ultrasonore 2 est remplacée ou lorsque l'on souhaite comparer l'état de la sonde ultrasonore à un instant donné par rapport à un état précédent.

Une valeur de bande passante (et de fréquence centrale si nécessaire) de la sonde virtuelle ainsi créée est déterminée dans le logiciel de traitement de données à chaque calibration. La valeur saisie correspond à la valeur de la bande passante des mesures réalisées à l'étape E1. Au cours de l'étape E3, le logiciel de traitement de données modélise une cale étalon virtuelle représentant une pièce dans le matériau de la pièce 5 comprenant les défauts de référence du réflecteur parfait 9 (cette cale étalon virtuelle correspond à une cale étalon classiquement utilisée dans l'art antérieur). Pour cela, le logiciel de traitement de données utilise :
- les caractéristiques du matériau de la pièce 5 obtenues à l'étape E0 ;
- les mesures réalisées et enregistrées à l'étape E1 ; et
- la sonde virtuelle générée à l'étape E2.

Le logiciel génère ensuite une cartographie virtuelle en amplitude et en temps de vol de la surface de fond de la cale étalon virtuelle, appelée cartographie virtuelle de fond. L'analyse de la cartographie virtuelle de fond, c'est-à-dire de la cartographie virtuelle de l'échographie de fond, consiste à vérifier que les différents défauts de référence du réflecteur parfait 9 sont présents sur cette cartographie et ont donc été détectés (lors de la mesure en E1 et lors de la modélisation). Si cela est nécessaire, les caractéristiques dimensionnelles des défauts présents sur la cartographie virtuelle (de l'échographie) de fond sont mesurées et comparées aux caractéristiques dimensionnelles connues des défauts de référence du réflecteur parfait. Par ailleurs, l'amplitude de la cartographie virtuelle de fond est comparée à la valeur attendue (par exemple 80%) et son homogénéité est validée.

Dans une variante de réalisation de la vérification de la calibration, l'étape E1 est réalisée lorsque la sonde ultrasonore 2 est dans son état initial, par exemple après achat, installation et réglage sur le système de contrôle 1 non destructif. Dans cette variante, les mesurées réalisées sur le réflecteur parfait 9 sont utilisées au cours de l'étape E3 et vont permettre de générer une cartographie virtuelle de fond initiale, qui pourra servir de référence lors de calibrations ultérieures.

On remplace ainsi la calibration usuelle par un procédé basé sur une modélisation et le balayage d'un réflecteur parfait 9 présentant des défauts type (ou de référence), pour acquérir et vérifier la qualité de la mesure (homogénéité de l'amplitude,...) et le comportement mécanique de la sonde ultrasonore 2 et de l'ensemble mécanique 3. Le réflecteur parfait 9 est plus stable dans le temps et moins onéreux à réaliser. De plus, les caractéristiques et propriétés du matériau de la pièce 5 sont stockées dans l'unité de traitement de données 11 (ou dans une unité de stockage 17 précisée ci-dessous) et réutilisées à chaque calibration. Ainsi, cette solution permet de s'affranchir en grande partie du besoin systématique d'un référentiel (ou cale étalon) réalisé avec le même matériau et procédé que la pièce 5 à contrôler.

En fonction des résultats de la vérification de la calibration, mise en œuvre à l'aide de l'ensemble 10 de vérification, différentes actions sont envisageables. A titre d'illustration :
- si la calibration se trouve dans des limites prédéfinies acceptables, la sonde 2 et le système de contrôle 1 sont considérés comme conformes pour le contrôle de la pièce 5 ;
- s'il apparaît un léger défaut de calibration, avec de petites variations, on peut réaliser une compensation logicielle des mesures ;
- si le défaut de calibration reste réduit, on peut également envisager de réaliser une correction du réglage mécanique de la sonde 2 ; et
- si un défaut de calibration important est détecté, on peut remplacer la sonde 2 par une autre sonde, et ensuite vérifier la calibration de cette nouvelle sonde.

Dans un mode de réalisation particulier, l'ensemble 10 comprend également, comme représenté sur la figure 3, l'unité de stockage 17 pour stocker les différentes données de la vérification de la calibration de la sonde ultrasonore 2 reçues de l'unité d'enregistrement 7 via une liaison 18, telles que les propriétés de la sonde 2, les paramètres des mesures réalisées et les cartographies générées. Cette unité de stockage 17 permet ainsi d'évaluer et caractériser d'éventuelles évolutions du système de contrôle 1 au cours du temps.

La méthode de contrôle non destructif d'une pièce 5, mise en œuvre à l'aide du système de contrôle 1, comprend les étapes successives F1 à F4 suivantes, représentées sur la figure 5 :
- une étape F1 de préparation du contrôle, comprenant :
   - un nettoyage de la pièce 5 (éventuellement un décrochage pour optimiser la mouillabilité) ;
   - une mise en place des éléments du système de contrôle 1 ;
- une étape F2 de vérification de la calibration de la sonde ultrasonore 2, telle que décrite ci-dessus et comprenant notamment les étapes E1 à E3 précitées ;
- une étape F3 d'inspection et d'analyse de la pièce 5, identique aux inspections et analyses réalisées classiquement, avec un balayage de la pièce 5 et un enregistrement de l'échographie de fond à l'aide de l'unité d'enregistrement 7, et éventuellement de l'échographie d'entrée. Puis :
   - une analyse des cartographies de la pièce 5 en amplitude, pour s'assurer que l'amplitude est homogène et à la valeur voulue (par exemple 80%) ; et
   - une analyse des cartographies de la pièce 5 en temps de vol, pour vérifier la présence ou l'absence de défauts ; et
- une étape F4 de fin de contrôle, comprenant :
   - un retrait de la pièce 5 du système de contrôle 1 ; et
   - si nécessaire, un démontage des éléments du système de contrôle 1.

## Revendications

1. Procédé de vérification de la calibration d'un système de contrôle non destructif d'au moins une pièce (5), ledit système (1) de contrôle non destructif comprenant au moins une sonde ultrasonore (2),
**caractérisé en ce qu'**il comprend des étapes E1 à E3 successives consistant :
E1/ à réaliser des mesures, à l'aide du système (1) de contrôle non destructif, sur au moins un réflecteur (9) dit parfait, ledit réflecteur parfait (9) comprenant au moins un défaut de référence, à enregistrer les mesures ainsi réalisées, et à créer et analyser une cartographie ultrasonore d'une surface d'entrée du réflecteur parfait (9) ;
E2/ à déterminer une sonde ultrasonore virtuelle, à partir de données physiques de la sonde ultrasonore (2), en l'associant à une bande passante représentative de mesures réalisées à l'étape E1 ; et
E3/ à modéliser une cale étalon virtuelle, représentant une pièce dans le matériau de la pièce (5) à contrôler comprenant les défauts de référence du réflecteur parfait (9), et à créer une cartographie virtuelle en amplitude et en temps de vol d'une surface de fond de la cale étalon virtuelle, à l'aide d'une modélisation utilisant comme données d'entrée des caractéristiques de la pièce (5), la sonde virtuelle déterminée à l'étape E2 et des mesures réalisées à l'étape E1, et à analyser ladite cartographie virtuelle pour déduire des caractéristiques de la calibration dudit système (1) de contrôle non destructif.

2. Procédé selon la revendication 1,
**caractérisé en ce qu'**il comprend une étape supplémentaire E0 antérieure à l'étape E1, cette étape supplémentaire E0 consistant à déterminer les caractéristiques d'un matériau correspondant à celui de la pièce (5) à contrôler, permettant de définir une pièce de référence virtuelle utilisée à l'étape E3.

3. Procédé selon l'une des revendications 1 et 2,
**caractérisé en ce que** l'analyse à l'étape E1 de la cartographie ultrasonore de la surface d'entrée consiste à vérifier des moyens mécaniques du système (1) de contrôle non destructif.

4. Procédé selon l'une quelconque des revendications 1 à 3,
**caractérisé en ce qu'**à l'étape E3, l'analyse de la cartographie virtuelle de la surface de fond consiste à vérifier si des défauts de référence du réflecteur parfait (9) sont présents sur cette cartographie virtuelle et ont été détectés et à comparer l'amplitude de la cartographie virtuelle à une valeur prédéterminée.

5. Procédé selon l'une quelconque des revendications 1 à 4,
**caractérisé en ce que** l'étape E1 est réalisée avec une sonde ultrasonore (2) dans un état initial et une cartographie virtuelle est générée à l'étape E3.

6. Procédé selon l'une quelconque des revendications précédentes,
**caractérisé en ce qu'**il consiste à prévoir sur le référentiel parfait (9) au moins un défaut de référence choisi parmi :
- un trou à fond plat ;
- un trou traversant ;
- un bord de pièce usiné ;
- une zone sans défaut ;
- une bille.

7. Procédé selon l'une quelconque des revendications précédentes,
**caractérisé en ce qu'**il comprend au moins une étape de stockage d'au moins certaines des informations suivantes :
- des mesures enregistrées à l'étape E1 ;
- au moins une cartographie ;
- des propriétés de la sonde ultrasonore (2).

8. Méthode de contrôle d'une pièce, à l'aide d'un système de contrôle non destructif comprenant au moins une sonde ultrasonore,
**caractérisée en ce qu'**elle comprend un procédé de vérification de la calibration du système (1) de contrôle non destructif, selon l'une quelconque des revendications 1 à 7.

9. Ensemble de vérification de la calibration d'un système de contrôle non destructif d'au moins une pièce (5), pour la mise en œuvre du procédé spécifié sous l'une quelconque des revendications 1 à 7, ledit ensemble (10) comprenant :
- au moins un réflecteur parfait (9) comprenant au moins un défaut de référence et sur lequel sont réalisées des mesures au moyen du système (1) de contrôle non destructif comprenant au moins une sonde ultrasonore (2) ;
- une unité d'enregistrement (7) configurée pour enregistrer les mesures réalisées sur ledit réflecteur parfait (9) ; et
- une unité de traitement de données (11) configurée pour déterminer au moins une cartographie virtuelle en amplitude et en temps de vol à l'aide d'une modélisation, à partir de valeurs mesurées et reçues de ladite unité d'enregistrement (7)
**caractérisé en ce que** l'unité de traitement de données (11) est également configurée pour générer une sonde ultrasonore virtuelle à partir de données physiques de la sonde ultrasonore (2), et pour modéliser une cale étalon virtuelle représentant une pièce dans le matériau de la pièce (5) à contrôler comprenant les défauts de référence du réflecteur parfait (9) à partir de valeurs mesurées et reçues de ladite unité d'enregistrement (7), des caractéristiques du matériau de la pièce (5) et de la sonde ultrasonore virtuelle.

## Patentansprüche

1. Verfahren zum Überprüfen der Kalibrierung eines zerstörungsfreien Prüfsystems für mindestens ein Teil (5),
wobei das zerstörungsfreie Prüfsystem (1) mindestens eine Ultraschallsonde (2) aufweist, **dadurch gekennzeichnet, dass** es die folgenden aufeinanderfolgenden Schritte E1 bis E3 aufweist:
E1/ zum Durchführen der Messungen mithilfe des zerstörungsfreien Prüfsystems (1) an mindestens einem als perfekt bezeichneten Reflektor (9), wobei der perfekte Reflektor (9) mindestens einen Referenzdefekt aufweist, zum Aufzeichnen der so durchgeführten Messungen und zum Erzeugen und Analysieren einer Ultraschallkartografie einer Eintrittsoberfläche des perfekten Reflektors (9);
E2/ zum Bestimmen einer virtuellen Ultraschallsonde ausgehend von den physikalischen Daten der Ultraschallsonde (2), indem diese einer Bandbreite zugeordnet wird, die für die in Schritt E1 durchgeführten Messungen repräsentativ ist; und
E3/ zum Modellieren eines virtuellen Endmaßes, das ein Teil in dem Material des zu prüfenden Teils (5) darstellt und die Referenzfehler des perfekten Reflektors (9) aufweist, und zum Erzeugen einer virtuellen Kartografie in Amplitude und Flugzeit einer Bodenoberfläche des virtuellen Endmaßes mithilfe einer Modellierung unter Verwendung von Eigenschaften des Teils (5) als Eingangsdaten, wobei die virtuelle Sonde in Schritt E2 bestimmt wird und die Messungen in Schritt E1 durchgeführt werden, und zum Analysieren der virtuellen Kartografie, um Eigenschaften der Kalibrierung des zerstörungsfreien Prüfsystems (1) abzuleiten.

2. Verfahren nach Anspruch 1, **dadurch gekennzeichnet, dass** es einen zusätzlichen Schritt E0 vor Schritt E1 aufweist, wobei dieser zusätzliche Schritt E0 darin besteht, die Eigenschaften eines Materials zu bestimmen, das dem von dem zu prüfenden Teil (5) entspricht, wodurch es möglich wird, ein virtuelles Referenzteil zu definieren, das in Schritt E3 verwendet wird.

3. Verfahren nach einem der Ansprüche 1 und 2, **dadurch gekennzeichnet, dass** die in Schritt E1 durchgeführte Analyse der Ultraschallkartografie der Eintrittsoberfläche darin besteht, die mechanischen Mittel des zerstörungsfreien Prüfsystems (1) zu überprüfen.

4. Verfahren nach einem der Ansprüche 1 bis 3, **dadurch gekennzeichnet, dass** die in Schritt E3 durchgeführte Analyse der virtuellen Kartografie der Bodenoberfläche darin besteht, zu überprüfen, ob Referenzfehler des perfekten Reflektors (9) auf dieser virtuellen Kartografie vorhanden sind und erkannt wurden, und die Amplitude der virtuellen Kartografie mit einem vorgegebenen Wert zu vergleichen.

5. Verfahren nach einem der Ansprüche 1 bis 4, **dadurch gekennzeichnet, dass** der Schritt E1 mit einer Ultraschallsonde (2) in einem Anfangszustand durchgeführt wird und eine virtuelle Kartografie in Schritt E3 erzeugt wird.

6. Verfahren nach einem der vorhergehenden Ansprüche, **dadurch gekennzeichnet, dass** es darin besteht, auf der perfekten Referenz (9) mindestens einen Referenzfehler bereitzustellen, ausgewählt aus:
- einem Loch mit flachem Boden;
- einem durchgehenden Loch;
- einer bearbeiteten Teilkante;
- einer fehlerfreien Zone;
- einer Kugel.

7. Verfahren nach einem der vorhergehenden Ansprüche, **dadurch gekennzeichnet, dass** es mindestens einen Schritt zum Speichern mindestens einiger der folgenden Informationen aufweist:
- in Schritt E1 aufgezeichnete Messungen;
- mindestens eine Kartographie;
- Eigenschaften der Ultraschallsonde (2).

8. Verfahren zum Prüfen eines Teils mithilfe eines zerstörungsfreien Prüfsystems, das mindestens eine Ultraschallsonde aufweist, **dadurch gekennzeichnet, dass** es ein Verfahren zum Überprüfen der Kalibrierung des zerstörungsfreien Prüfsystems (1) nach einem der Ansprüche 1 bis 7 aufweist.

9. Baugruppe zum Überprüfen der Kalibrierung eines zerstörungsfreien Prüfsystems für mindestens ein Teil (5), wobei die Baugruppe (10) für die Durchführung des in einem der Ansprüche 1 bis 7 angegebenen Verfahrens Folgendes aufweist:
- mindestens einen perfekten Reflektor (9), der mindestens einen Referenzdefekt aufweist und mit dem Messungen mithilfe des zerstörungsfreien Prüfsystems (1), das mindestens eine Ultraschallsonde (2) aufweist, durchgeführt werden;
- eine Aufzeichnungseinheit (7), ausgebildet zum Aufzeichnen der an dem perfekten Reflektor (9) durchgeführten Messungen; und
- eine Datenverarbeitungseinheit (11), ausgebildet zum Bestimmen von mindestens einer virtuellen Kartografie in Amplitude und Flugzeit mithilfe einer Modellierung, ausgehend von den von der Aufzeichnungseinheit (7) gemessenen und erhaltenen Daten, **dadurch gekennzeichnet, dass** die Datenverarbeitungseinheit (11) auch ausgebildet ist, um eine virtuelle Ultraschallsonde ausgehend von physikalischen Daten der Ultraschallsonde (2) zu erzeugen, und zum Modellieren eines virtuellen Endmaßes, das ein Teil in dem Material des zu prüfenden Teils (5) darstellt und die Referenzfehler des perfekten Reflektors (9) aufweist, ausgehend von den von der Aufzeichnungseinheit (7) gemessenen und erhaltenen Daten, den Eigenschaften des Materials des Teils (5) und der virtuellen Ultraschallsonde.

## Claims

1. Method for verifying the calibration of a system for non-destructively testing at least one part (5), said non-destructive testing system (1) comprising at least one ultrasound probe (2), **characterized in that** it comprises successive steps E1 to E3 consisting:
E1/ in performing measurements, with the help of the non-destructive testing system (1), on at least one so-called perfect reflector (9), said perfect reflector (9) comprising at least one reference defect, in recording the measurements thus performed, and in creating and analysing an ultrasound map of an entry surface of the perfect reflector (9);
E2/ in defining a virtual ultrasound probe, on the basis of physical data from the ultrasound probe (2), and associating it with a passband representative of measurements performed in the step E1; and
E3/ in modelling a virtual gauge block, representing a part in the material of the part (5) to be tested comprising the reference defects of the perfect reflector (9), and in creating a virtual map in amplitude and in flight time of a bottom surface of the virtual gauge block, with the help of modelling using as input data
characteristics of the part (5), the virtual probe defined in the step E2 and measurements performed in the step E1, and in analysing said virtual map to deduce characteristics of the calibration of said non-destructive testing system (1).

2. Method according to Claim 1,
**characterized in that** it comprises a supplementary step E0 prior to the step E1, this supplementary step E0 consisting in determining the characteristics of a material corresponding to that of the part (5) to be tested, making it possible to define a virtual reference part used in the step E3.

3. Method according to either of Claims 1 and 2,
**characterized in that** the analysis in the step E1 of the ultrasound map of the entry surface consists in verifying mechanical means of the non-destructive testing system (1).

4. Method according to any one of Claims 1 to 3,
**characterized in that**, in the step E3, the analysis of the virtual map of the bottom surface consists in verifying whether reference defects of the perfect reflector (9) are present in this virtual map and have been detected and in comparing the amplitude of the virtual map with a predefined value.

5. Method according to any one of Claims 1 to 4,
**characterized in that** the step E1 is performed with an ultrasound probe (2) in an initial state and a virtual map is generated in the step E3.

6. Method according to any one of the preceding claims,
**characterized in that** it consists in providing, in the perfect reference (9), at least one reference defect chosen from:
- a flat-bottomed hole;
- a through-hole;
- a machined part edge;
- a defect-free area;
- a bead.

7. Method according to any one of the preceding claims,
**characterized in that** it comprises at least one step of storing at least some of the following information:
- measurements recorded in the step E1;
- at least one map;
- properties of the ultrasound probe (2).

8. Method for testing a part, with the help of a non-destructive testing system comprising at least one ultrasound probe,
**characterized in that** it comprises a method for verifying the calibration of the non-destructive testing system (1), according to any one of Claims 1 to 7.

9. Assembly for verifying the calibration of a system for non-destructively testing at least one part (5), for implementing the method specified in any one of Claims 1 to 7, said assembly (10) comprising:
- at least one perfect reflector (9) comprising at least one reference defect and on which measurements are performed by means of the non-destructive testing system (1) comprising at least one ultrasound probe (2);
- a recording unit (7) configured to record the measurements performed on said perfect reflector (9) ; and
- a data-processing unit (11) configured to determine at least one virtual map in amplitude and in flight time with the help of modelling, on the basis of measured values received from said recording unit (7)
**characterized in that** the data-processing unit (11) is also configured to generate a virtual ultrasound probe on the basis of physical data from the ultrasound probe (2), and to model a virtual gauge block representing a part in the material of the part (5) to be tested comprising the reference defects of the perfect reflector (9) on the basis of measured values received from said recording unit (7), of the characteristics of the material of the part (5) and of the virtual ultrasound probe.
